# EUROPÄISCHE PATENTSCHRIFT

(11) **EP 3 222 979 B1**
(45) Veröffentlichungstag und Bekanntmachung des Hinweises auf die Patenterteilung: **06.05.2020**
(21) Anmeldenummer: 17160795.5
(22) Anmeldetag: 14.03.2017
(51) Int. Cl.: G01F 23/02, F16N 19/00

(54) **ÖLTANK**
OIL TANK
RÉSERVOIR D'HUILE

(30) Priorität: 21.03.2016 DE 102016105229
(43) Veröffentlichungstag der Anmeldung: 27.09.2017
(73) Patentinhaber: Rolls-Royce Deutschland Ltd & Co KG, 15827 Blankenfelde-Mahlow (DE)
(72) Erfinder: BEIER, Jürgen, 15827 Blankenfelde-Mahlow (DE); PATERSON, Andrew, 15827 Blankenfelde-Mahlow (DE)
(74) Vertreter: Müller, Wolfram Hubertus

(56) Entgegenhaltungen:
- DE-A1- 1 935 514
- DE-A1- 2 717 133
- DE-A1- 10 020 569
- DE-C2- 2 634 919

## Beschreibung

Die Erfindung betrifft einen Öltank gemäß dem Oberbegriff des Patentanspruchs 1.

Zur Bestimmung des Ölstands in einem Öltank eines Flugtriebwerks ist es bekannt, ein Sichtfenster in der Außenwand des Öltanks auszubilden. Über ein solches Sichtfenster kann ein Wartungstechniker unabhängig von den Messwerten eines Ölstandsensors den Ölstand eines Öltanks unmittelbar visuell erfassen und bestimmen, ob die im Öltank vorhandene Ölmenge für weitere Operationen ausreichend ist.

Bei einer solchen visuellen Erfassung des Ölstands ergibt sich allerdings das Problem, dass die visuelle Anzeige fehlerhaft ist, wenn der Öltank sich nicht in einer exakt horizontalen Ausrichtung, sondern in einer Schräglage befindet, d.h. um seine Längsachse oder Querachse verkippt ist. Dies kann beispielsweise aufgrund von Bodenunebenheiten der Fall sein. Um eine solche Falschanzeige auszugleichen, ist es bekannt, den Öltank mit einer größeren Menge an Öl zu befüllen als notwendig ist. Typischerweise enthält der Öltank eines Flugtriebwerks ca. 1 Liter an zusätzlichem Öl. Aus der DE 26 34 919 C2 ist es bekannt, einen Sensor zentral im Öltank anzuordnen. Dabei ist vorgesehen, dass dem Sensor Licht über erste Lichtleitkabel zugeführt und die Position eines im Sensor angeordneten Schwimmers über zweite Lichtleitkabel erfasst wird. Die ersten und zweiten Lichtleitkabel werden dem Tank von außen zugeführt.

Die DE 27 17 133 A1 beschreibt eine Vorrichtung zur Anzeige des Ölstandes im Getriebegehäuse eines Flugzeugs. Es ist vorgesehen, dass innerhalb eines Behälters an der Stelle, an der die Flüssigkeitsänderung bei Schräglagen am geringsten ist, senkrecht zum Flüssigkeitsspiegel ein Lichtstab mit einer Skala angeordnet ist. Gleichzeitig ist vorgesehen, dass die Behälterwand an einer gut zugänglichen Stelle ein Fenster aufweist, durch das der Lichtstab sichtbar ist.

Der vorliegenden Erfindung liegt die Aufgabe zu Grunde, einen Öltank bereitzustellen, insbesondere einen Öltank für ein Flugtriebwerk, der es ermöglicht, den Füllstand im Öltank auch bei einer Schräglage des Öltanks visuell exakt zu erfassen.

Diese Aufgabe wird durch einen Öltank mit den Merkmalen des Anspruchs 1 gelöst. Ausgestaltungen der Erfindung sind in den Unteransprüchen angegeben.

Danach betrachtet die Erfindung einen Öltank, der eine Außenwandung, die eine Seitenbegrenzung umfasst, und ein Tankinneres, das von der Außenwandung umschlossen ist, aufweist. Die Erfindung sieht vor, eine Sichtpassage bereitzustellen, die sich ausgehend von der Seitenbegrenzung in das Tankinnere des Öltanks erstreckt und es ermöglicht, den Füllstand des mit Öl gefüllten Öltanks in der Tankmitte von außen visuell abzulesen. Als Tankmitte im Sinne der vorliegenden Erfindung wird dabei der Ort im Öltank angesehen, an dem durch Schräglagen des Öltanks verursachte Füllstandsänderungen des mit Öl gefüllten Öltanks minimal sind.

Die vorliegende Erfindung beruht somit auf dem Gedanken, mittels einer Sichtpassage eine Sichtlinie zur Tankmitte bereitzustellen, die es erlaubt, von außen den Füllstand des Öltanks in der Tankmitte visuell, beispielsweise mit den Augen eines Wartungstechnikers zu erfassen. Da der Füllstand in der Tankmitte erfasst wird, wo Füllstandsänderungen aufgrund von Schräglagen des Öltanks nicht bestehen oder minimal sind, wird der Füllstand dabei in exakter Weise erfasst.

Durch die genaue Erfassung des Füllstandes des Öltanks ist es nicht mehr erforderlich, eine eventuelle Schräglage des Öltanks bei der Bestimmung der Öltankgröße und des Tankvolumens zu berücksichtigen. Insbesondere kann auf die Zugabe einer Zusatzmenge an Öl verzichtet werden. Dementsprechend liegt eine Gewichtsersparnis vor.

Die Sichtpassage weist einen Passagenanfang auf, der im Bereich der Seitenbegrenzung ausgebildet ist. Dabei umfasst der Passagenanfang ein erstes optisch transparentes Fenster. Das erste optisch transparente Fenster besteht aus einem optisch transparenten Material, beispielsweise aus Glas oder Kunststoff. Es kann auch als Sichtglas bezeichnet werden. Das erste optisch transparente Fenster ist somit in oder an einer Öffnung in der Seitenbegrenzung des Öltanks ausgebildet. Es erlaubt einem Wartungstechniker, von außen durch die Sichtpassage in Richtung der Tankmitte zu sehen. Das erste optische Fenster kann plan oder gebogen ausgebildet sein.

Es kann vorgesehen sein, dass das erste optisch transparente Fenster abgedichtet und feuerfest in der Seitenbegrenzung des Öltanks befestigt ist, so dass die Integrität des Öltanks durch die Sichtpassage und deren Bestandteile nicht beeinträchtigt ist.

Als Seitenbegrenzung des Öltanks wird jede Struktur bezeichnet, die bei horizontaler Anordnung des Öltanks diesen seitlich begrenzt. Die Seitenbegrenzung kann durch mehrere gerade Seitenwände gebildet sein, beispielsweise wenn der Öltank die Form eines Quaders aufweist, oder durch eine gebogene Seitenwand gebildet sein, beispielsweise wenn der Öltank die Form eines Zylinders aufweist. Neben der Seitenbegrenzung weist der Öltank auch einen Boden und einen Deckel auf, die mit der Seitenbegrenzung verbunden sind und zusammen mit dieser die Außenwandung des Öltanks bilden.

Die Sichtpassage weist des Weiteren ein Passagenende auf, das zur Tankmitte hin ausgebildet ist. Dabei umfasst das Passagenende ein zweites optisch transparentes Fenster. Am zweiten optisch transparenten Fenster wird der Füllstand in der Tankmitte angezeigt. Über das erste optisch transparente Fenster kann dieser Füllstand in der Tankmitte unmittelbar abgelesen werden. Das zweite optische Fenster ist gemäß einer Ausgestaltung der Erfindung plan ausgeführt. Es handelt sich beispielsweise um ein Glasfenster oder um ein Kunststofffenster.

Zwischen dem Passagenanfang und dem Passagenende erstreckt sich eine Passagenwandung, die die Sichtpassage gegenüber dem Tankinneren abgrenzt und abdichtet. Die Passagenwandung besteht beispielsweise aus Metall. Grundsätzlich kann sie aus einem beliebigen Material hergestellt sein. Die Passagenwandung kann beispielsweise einen rechteckförmigen Querschnitt oder einen kreisförmigen Querschnitt aufweisen, d.h. die Sichtpassage kann beispielsweise als rundes oder vierkantiges Rohr ausgebildet sein. Die Passagenwandung bzw. die durch diese gegenüber dem Tankinneren abgrenzte Sichtpassage ist hohl in dem Sinne, dass sie lediglich mit Luft oder alternativ mit einem anderen transparenten Gas gefüllt ist.

Gemäß einer Ausgestaltung der Erfindung ist vorgesehen, dass das zweite optisch transparente Fenster mit einer Höhenskala versehen ist, so dass der Füllstand in der Tankmitte am zweiten optisch transparenten Fenster anhand der Skala direkt ablesbar ist.

Gemäß der Erfindung erstreckt sich die Sichtpassage zwischen dem Passagenanfang und dem Passagenende geradlinig, wobei eine am zweiten optisch transparenten Fenster angezeigte Füllstandshöhe über das erste optisch transparente Fenster ablesbar ist.

Eine weitere Ausgestaltung der Erfindung sieht vor, dass in die Sichtpassage ein optisches System integriert ist, dass das zweite optisch transparente Fenster optisch auf das erste optisch transparente Fenster abbildet. Die Integration eines optischen Systems in die Sichtpassage erlaubt beispielsweise, die Sichtpassage mit Bereichen unterschiedlichen Durchmessers und/oder gekrümmt auszubilden.

So sieht eine Ausgestaltung der Erfindung vor, dass das optische System als Weitwinkelobjektiv ausgebildet ist. Die Ausbildung als Weitwinkelobjektiv umfasst in einer Ausgestaltung eine Ausbildung als Fischaugenobjektiv. Das Weitwinkelobjektiv befindet sich am Übergang zwischen einem ersten Bereich der Sichtpassage, der eine kleinere Querschnittsfläche aufweist und an den Passagenanfang angrenzt, und einem zweiten Bereich der Sichtpassage, der eine sich vergrößernde Querschnittsfläche aufweist und an das Passagenende angrenzt. Hierdurch kann das Volumen der Sichtpassage im ersten Bereich der Sichtpassage reduziert werden, so dass diese einen kleineren Anteil am Innenvolumen des Öltanks in Anspruch nimmt und dementsprechend der Öltank mehr Öl aufnehmen kann. Durch Verwendung eines Weitwinkelobjektiv wird die am zweiten optischen Fenster angezeigte Füllstandshöhe trotz einer angrenzend an das erste optische Fenster querschnittsreduzierten Sichtpassage auf letztere abgebildet und kann dort visuell erfasst werden.

In einer Ausgestaltung der Erfindung ist vorgesehen, dass die Sichtpassage sich ausgehend von der Seitenbegrenzung durch das Tankinnere in Richtung einer Tankmittenlinie des Öltanks erstreckt. Die Tankmittenlinie ist dabei eine Linie, die im horizontal ausgerichteten Öltank vertikal zur Oberfläche des im Öltanks befindlichen Öls verläuft und die mindestens einen Punkt aufweist, in dem durch Schräglagen des Öltanks verursachte Füllstandsänderungen des mit Öl gefüllten Öltanks minimal sind.

Die Tankmittenlinie ist dabei definiert in Bezug auf den Öltank, d.h. es handelt sich um eine gedachte Linie im Bezugssystem des Öltanks. Sie wird definiert durch eine Richtung und mindestens einen Punkt, den sie umfasst. Die Richtung ist die vertikale Richtung im horizontal ausgerichteten Öltank. Wenn der Öltank verkippt ist, ist auch die Tankmittenlinie verkippt. Der mindestens eine Punkt ist die Tankmitte bei einer betrachteten Füllhöhe, d.h. der Punkt, an dem bei einer betrachteten Füllhöhe durch Schräglagen des Öltanks verursachte Füllstandsänderungen minimal sind.

Jeder Füllstand, d.h. jede Füllhöhe des Öltanks besitzt notwendigerweise eine andere Tankmitte, da die vertikale Koordinate sich bei einer Änderung der Füllhöhe ändert. Die Tankmittenlinie ist in der Regel die Linie, die die Tankmitten des Öltanks bei horizontaler Ausrichtung des Öltanks für verschiedene Füllstände verbindet.

Eine Ausgestaltung der Erfindung sieht vor, dass die Sichtpassage sich ausgehend von der Seitenbegrenzung durch das Tankinnere bis zur Tankmittenlinie erstreckt. Dies erlaubt eine besonders exakte Ablesung der Füllhöhe.

Weiter kann vorgesehen sein, dass die Tankmittenlinie in der oder parallel zur Ebene des zweiten optisch transparenten Fensters verläuft. Hierdurch wird sichergestellt, dass das zweite optisch transparente Fenster sich in vertikaler Richtung über einen Bereich erstreckt, in dem der Füllstand des Öltanks variiert.

Grundsätzlich erfordert die vorliegende Erfindung keine Beleuchtung des zweiten optisch transparenten Fensters, da über das erste optisch transparente Fenster Licht in die Sichtpassage einfällt und dieses Licht das zweite optisch transparente Fenster beleuchtet. Trotzdem kann in einer Ausführungsvariante der Erfindung vorgesehen sein, dass in die Sichtpassage eine zusätzliche Beleuchtungsquelle integriert ist, die das zweite optisch transparente Fenster beleuchtet. Das Licht der zusätzlichen Beleuchtungsquelle wird dabei vom zweiten optisch transparenten Fenster reflektiert. Die Verwendung einer zusätzlichen Beleuchtungsquelle kann insbesondere bei schlechten Lichtverhältnissen die Ablesequalität verbessern.

Grundsätzlich ist es bekannt, zusätzlich zu einer visuellen Erfassung des Füllstandes eines Öltanks auch eine Füllstanderfassung mittels eines oder mehrerer Sensoren durchzuführen, die elektrische Signale den Füllstand betreffend einer Auswärtseinheit zur Verfügung stellen. Eine Ausgestaltung der Erfindung sieht vor, dass ein solcher Füllstandssensor bzw. digitaler Sensor an der Sichtpassage im Bereich der Tankmitte angeordnet ist. Der Füllstandssensor erfasst aufgrund seiner Lage in der Tankmitte dabei ebenfalls in exakter Weise den Füllstand des Öltanks. Seine Befestigung an der Sichtpassage ermöglicht eine einfache Montage und Halterung des Sensors.

Gemäß einer Ausgestaltung der Erfindung sind der Öltank und die Sichtpassage derart ausgebildet, dass die Sichtpassage nach Herstellung des Öltanks von außen durch eine Öffnung in der Seitenbegrenzung des Öltanks in diesen einsteckbar ist. Die Sichtpassage wird dabei abdichtend und in feuerfester Weise an der Seitenbegrenzung fixiert. Dies erlaubt eine einfache Herstellung des Öltanks mit Sichtpassage, da die Sichtpassage als gesondertes Teil gefertigt wird, dass nach seiner Herstellung mit dem Öltank verbunden wird.

Gemäß einer Ausgestaltung ist die Sichtpassage im Querschnitt rechteckig oder kreisförmig ausgebildet.

Gemäß der Erfindung ist die Sichtpassage mit Luft gefüllt. Es handelt sich somit um ein hohles, lediglich mit Luft gefülltes Volumen, das sich zwischen dem ersten optisch transparenten Fenster und dem zweiten optisch transparenten Fenster erstreckt, wobei jedoch, wie bereits ausgeführt, ein optisches Linsensystem in die Sichtpassage integriert sein kann. Alternativ kann die Sichtpassage mit einem anderen Gas gefüllt sein.

Der Öltank kann grundsätzlich eine beliebige Form aufweisen. Er ist gemäß einer Ausgestaltung der Erfindung symmetrisch ausgebildet im Hinblick auf den Verlauf der Seitenbegrenzung, beispielsweise zylinderförmig oder quaderförmig.

Die Erfindung betrifft des Weiteren ein Flugtriebwerk mit einem Öltank nach Anspruch 1.

Die Erfindung wird nachfolgend unter Bezugnahme auf die Figuren der Zeichnung anhand mehrerer Ausführungsbeispiele näher erläutert. Es zeigen:
- Figur 1: eine vereinfachte schematische Schnittdarstellung eines als Zweistrom-Strahltriebwerk ausgebildeten Flugtriebwerks mit einem Öltank;
- Figur 2: eine Schnittdarstellung eines Öltanks gemäß dem Stand der Technik;
- Figur 3: ein Ausführungsbeispiel eines Öltanks, der eine Sichtpassage ausbildet, die sich von der Seitenbegrenzung des Öltanks bis zur Tankmitte erstreckt;
- Figur 4: eine vergrößerte Darstellung der Sichtpassage der Figur 3;
- Figur 5: eine erste alternative Ausgestaltung einer Sichtpassage, wobei eine Beleuchtungsquelle in die Sichtpassage integriert ist; und
- Figur 6: eine zweite alternative Ausgestaltung einer Sichtpassage, wobei ein Weitwinkelobjektiv in die Sichtpassage integriert ist.

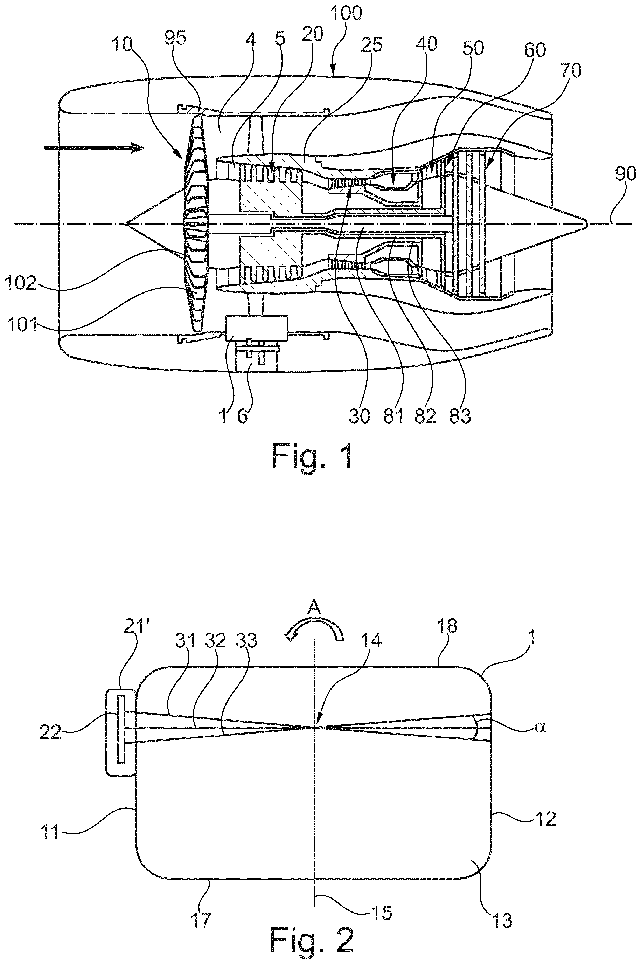

Die Figur 1 zeigt schematisch ein Zweistrom-Strahltriebwerk 100, das eine Fanstufe mit einem Fan 10 als Niederdruckverdichter, einen Mitteldruckverdichter 20, einen Hochdruckverdichter 30, eine Brennkammer 40, eine Hochdruckturbine 50, eine Mitteldruckturbine 60 und eine Niederdruckturbine 70 aufweist.

Der Mitteldruckverdichter 20 und der Hochdruckverdichter 30 weisen jeweils eine Mehrzahl von Verdichterstufen auf, die jeweils eine Rotorstufe und eine Statorstufe umfassen. Das Strahltriebwerk 1 der Figur 1 weist des Weiteren drei separate Wellen auf, eine Niederdruckwelle 81, die die Niederdruckturbine 70 mit dem Fan 10 verbindet, eine Mitteldruckwelle 82, die die Mitteldruckturbine 60 mit dem Mitteldruckverdichter 20 verbindet und eine Hochdruckwelle 83, die die Hochdruckturbine 50 mit dem Hochdruckverdichter 30 verbindet. Dies ist jedoch lediglich beispielhaft zu verstehen. Wenn das Strahltriebwerk beispielsweise keinen Mitteldruckverdichter und keine Mitteldruckturbine besitzt, wären nur eine Niederdruckwelle und eine Hochdruckwelle vorhanden.

Der Fan 10 weist eine Mehrzahl von Fan-Schaufeln 101 auf, die mit einer Fan-Scheibe 102 verbunden sind. Der Annulus der Fan-Scheibe 102 bildet dabei die radial innere Begrenzung des Strömungspfads durch den Fan 10. Radial außen wird der Strömungspfad durch ein Fangehäuse 95 begrenzt. Stromaufwärts der Fan-Scheibe 102 ist ein Nasenkonus angeordnet.

Hinter dem Fan 10 bildet das Strahltriebwerk 1 einen Sekundärstromkanal 4 und einen Primärstromkanal 5 aus. Der Primärstromkanal 5 führt durch das Kerntriebwerk, das den Mitteldruckverdichter 20, den Hochdruckverdichter 30, die Brennkammer 40, die Hochdruckturbine 50, die Mitteldruckturbine 60 und die Niederdruckturbine 70 umfasst. Dabei sind der Mitteldruckverdichter 20 und der Hochdruckverdichter 30 von einem Umfangsgehäuse 25 umgeben, dass innenseitig eine Ringraumfläche bildet, die den Primärstromkanal 5 radial außen begrenzt. Radial innen ist der Primärstromkanal 5 durch entsprechende Kranzoberflächen der Rotoren und Statoren der jeweiligen Verdichterstufen bzw. durch die Nabe oder mit der Nabe verbundene Elemente der entsprechenden Antriebswelle begrenzt.

Die beschriebenen Komponenten besitzen eine gemeinsame Symmetrieachse 90. Die Symmetrieachse 90 definiert eine axiale Richtung des Flugtriebwerks. Eine radiale Richtung des Flugtriebwerks verläuft senkrecht zur axialen Richtung.

Das Zweistrom-Strahltriebwerk 100 umfasst des Weiteren einen Hilfsgeräteträger 6, der mechanisch eine Mehrzahl von Hilfsgeräten antreibt, und einen Öltank 1, der typischerweise Teil eines in sich geschlossenen, rezirkulierenden Ölsystems ist. Der Hilfsgeräteträger 6 und der Öltank 1 sind in der Figur 1 schematisch dargestellt.

Im Kontext der vorliegenden Erfindung ist die Ausgestaltung des Öltanks 1 von besonderer Bedeutung, wie nachfolgend erläutert werden wird.

Zum besseren Verständnis des Hintergrunds der vorliegenden Erfindung wird zunächst anhand der Figur 2 ein Öltank 1 gemäß dem Stand der Technik erläutert. Der Öltank 1 besitzt die Form eines Quaders und dementsprechend eine Außenwandung, die zwei Seitenwände 11, 12, zwei weitere Seitenwände, die in der Schnittdarstellung der Figur 2 nicht sichtbar sind, eine Bodenfläche 17 und eine Dachfläche 18 umfasst. Der Öltank 1 definiert ein Tankinneres 13, das mit Öl gefüllt ist. Die vier Seitenwände bilden dabei die Seitenbegrenzung des Öltanks 1.

In der einen Seitenwand 11 des Öltanks 1 ist eine Halterung 21' angeordnet, die ein optisch transparentes, dicht in der Seitenwand 11 befestigtes Sichtfenster 22 aufweist. Am Sichtfenster 22 kann von außen visuell der Füllstand des Öls im Öltank 1 abgelesen werden. Allerdings ist der Füllstand, der am Sichtfenster 22 angezeigt wird, von der Ausrichtung des Öltanks 1 abhängig. Bei exakt horizontaler Ausrichtung des Öltanks 1 weist die Flüssigkeitsoberfläche 32 des Öls angrenzend an die Seitenwand 11 und angrenzend an die Seitenwand 12 den gleichen Abstand zur Bodenfläche 17 und zur Dachfläche 18 auf. Dementsprechend wird der Füllstand der Flüssigkeitsoberfläche 32 am Sichtfenster 22 korrekt angezeigt.

Wenn der Öltank 1 dagegen verkippt ist, d.h. in eine Schräglage kommt, wird am Sichtfenster 22 ein fehlerhafter Füllstand abgelesen. Eine Verkippung des Öltanks 1 kann dabei zum einen durch ein Verkippen des Öltanks um seine Querachse (auch als Nicken bezeichnet) und zum anderen durch ein Verkippen des Öltanks um seine Längsachse (auch als Rollen bezeichnet) erfolgen. Die Figur 2 zeigt den Fall des Verkippens A um die Querachse. Der Grund für die Verkippung besteht beispielsweise in einer nicht ebenen Bodenfläche, auf der das Flugzeug, das das Flugtriebwerk mit dem betrachteten Öltank trägt, steht.

Es sei angenommen, dass der Öltank 1 aus der exakt horizontalen Lage um maximal den Winkel α/2 sowohl nach vorne als auch nach hinten verkippt sein kann. Da die Ausrichtung der Flüssigkeitsoberfläche des Öls von einem Verkippen des Öltanks 1 nicht tangiert wird, führt dies dazu, dass die Flüssigkeitsoberfläche im Bezugssystem des Öltanks bei einem Verkippen des Öltanks 1 schräg verläuft. Dies ist in der Figur 2 durch die Flüssigkeitsoberflächen 31, 33 verdeutlicht. Bei einem Verkippen des Öltanks 1 nach vorne um den Winkel α/2 stellt sich die Flüssigkeitsoberfläche 31 im Öltank 1 ein. Bei einem Verkippen des Öltanks 1 nach hinten um den Winkel α/2 stellt sich die Flüssigkeitsoberfläche 33 im Öltank 1 ein. Dementsprechend zeigt das Sichtfenster 22 bei einer Schräglage des Öltanks 1 unterschiedliche und fehlerhafte Füllstände an.

Gleichzeitig ergibt sich aus der Figur 2, dass der Füllstand des Öltanks 1 in der Tankmitte 14 von einem Verkippen bzw. verschiedenen Schräglagen des Öltanks 1 nicht beeinflusst wird. In der Tankmitte 14 ist die Füllstandshöhe im Wesentlichen konstant. Die gilt ebenso bei einem Verkippen des Öltanks um seine Längsachse. Betrachtet man beide Verkippmöglichkeiten des Öltanks, ein Verkippen um die Querachse und ein Verkippen um die Längsachse, so ist die Tankmitte ein Punkt im Tankinneren.

Die Figur 2 zeigt auch eine Tankmittenlinie 15. Die Tankmittenlinie 15 ist definiert als Linie, die im horizontal ausgerichteten Öltank 1 vertikal zur Oberfläche des im Öltanks 1 befindlichen Öls verläuft. Dabei umfasst die Tankmittenlinie 15 mindestens einen Punkt aufweist, in dem durch Schräglagen des Öltanks verursachte Füllstandsänderungen des mit Öl gefüllten Öltanks minimal sind, d.h. mindestens eine Tankmitte 14. Die Tankmittenlinie 15 ist in der Regel identisch mit einer Linie, die dadurch entsteht, wenn die Tankmitten für unterschiedliche Füllhöhen des Öltanks 1 aneinandergereiht werden. Sie stellt eine gerade verlaufende Linie im Öltank 1 dar.

Grundsätzlich kann auch der Fall eintreten, dass die Aneinanderreihung der Tankmitten keine gerade Linie, sondern eine gebogene Linie bildet. Dies kann insbesondere dann der Fall sein, wenn der Öltank asymmetrisch ausgebildet ist. Die oben erfolgte Definition der Tankmittenlinie stellt sicher, dass die Tankmittenlinie auch für diesen Fall eine gerade Linie ist, die sich im horizontal ausgerichteten Öltank 1 vertikal zur Oberfläche des Öls erstreckt.

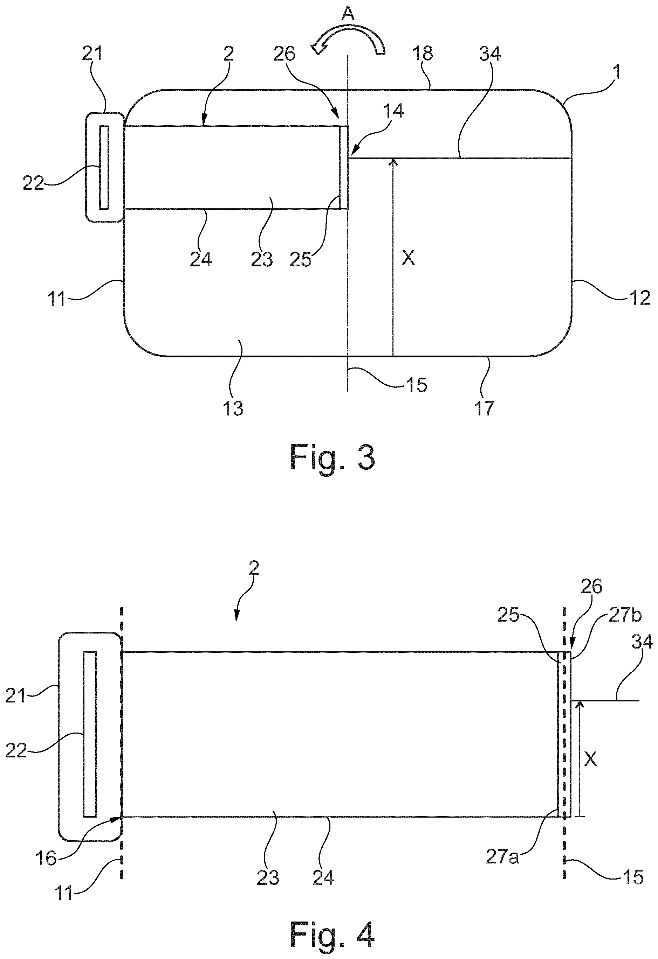

Die Figur 3 zeigt ein Ausführungsbeispiel eines erfindungsgemäßen Öltanks 1. Der Öltank 1 besitzt eine Außenwandung, die vier Seitenwände, von denen zwei Seitenwände 11, 12 dargestellt sind, eine Bodenfläche 17 und eine Dachfläche 18 umfasst. Alternativ besitzt der Öltank eine zylindrische Form, für welchen Fall nur eine kreisförmig gebogene Seitenwand vorliegt. Grundsätzlich kann der Öltank 1 eine beliebige Form aufweisen. Die Flüssigkeitsoberfläche 34 im horizontal ausgerichteten Öltank 1 zeigt den tatsächlichen Füllstand X des Öltanks 1 an. Auf der Tankmittenlinie 15 wird der Füllstand X auch bei Schräglagen des Öltanks 1 aus den in Bezug auf die Figur 2 erläuterten Gründen korrekt angezeigt.

Die vorliegende Erfindung sieht vor, eine Füllstandermittlung nicht an der Seitenbegrenzung des Öltanks, sondern in der Tankmitte 14 vorzunehmen und hierzu eine Sichtpassage 2 bereitzustellen, die eine optische Sichtlinie von der Seitenbegrenzung 11 des Öltanks 1 bis zur Tankmitte 14 bzw. bis zur Tankmittenlinie 15 ermöglicht.

Die Sichtpassage 2, die in der Figur 4 vergrößert dargestellt ist, umfasst einen Passagenanfang 21, der im Bereich der einen Seitenwand 11 ausgebildet ist und ein erstes optisch transparentes Fenster 22 aufweist. Der Passagenanfang 21 mit dem Sichtfenster 22 ist über eine feuerfeste Dichtung 16 an der Seitenwand 11 befestigt. Die Seitenwand 11 verweist dabei im Bereich der Sichtpassage 2 eine Aussparung (nicht gesondert dargestellt) auf, durch die die Sichtpassage 2 in das Innere des Öltanks 1 eingeschoben ist, wobei der Passagenanfang 21 mit dem optisch transparenten Fenster 22 die Aussparung in der Seitenwand verschließt.

An den Passagenanfang 21 schließt sich eine Passagenwandung 24 an, die das Passageninnere 23 vom Tankinneren 13 abgrenzt. Die Passagenwandung 24 besteht beispielsweise aus Metall. Das Passageninnere 23 ist hohl in dem Sinne, dass es lediglich mit Luft oder alternativ einem anderen transparenten Gas gefüllt ist.

Die Passagenwandung 24 weist beispielsweise einen rechteckigen oder einen kreisförmigen Querschnitt auf. Die Querschnittsfläche ist im dargestellten Ausführungsbeispiel, jedoch nicht notwendigerweise über die Länge der Passagenwandung 24 konstant.

Die Sichtpassage 2 erstreckt sich ausgehend von der Seitenbegrenzung 11 durch das Tankinnere 13 bis zur Tankmitte 14, wo sie ein Passagenende 26 mit einem zweiten optisch transparenten Fenster 25 ausbildet. Dabei kann vorsehen, dass das Passagenende 26 zwei stirnseitige und zueinander beabstandete Wandungen 27a, 27b aufweist, zwischen denen das zweite optisch transparente Fenster 25 angeordnet ist. Sowohl das erste als auch das zweite optisch transparente Fenster 22, 25 sind in einer Ausgestaltung der Erfindung plan ausgebildet.

Das zweite optisch transparente Fenster 25 ist derart angeordnet und ausgerichtet, dass die Tankmittenlinie 15, die wie in Bezug auf die Figur 2 erläutert definiert ist, in der Ebene des zweiten optisch transparenten Fensters 25 verläuft. Es ist somit möglich, verschiedene Füllstände X im Öltank 1 unmittelbar am zweiten optisch transparenten Fenster 25 abzulesen. Hierzu kann vorgesehen sein, dass das zweite optisch transparente Fenster 25 eine Höhenskala aufweist, an der sich direkt die Höhe des Füllstandes X ablesen lässt. So ist das zweite optische Fenster 25 in dem Bereich, der an Öl angrenzt, dunkler als in dem Bereich, der an Luft angrenzt. Die Trennlinie 34 ist am zweiten optischen Fenster 25 klar zu erkennen.

Über das erste optisch transparente Fenster 21 und die Sichtpassage 2 kann der Füllstand X, der am zweiten optisch transparenten Fenster 25 angezeigt wird, von außerhalb des Öltanks 1 visuell abgelesen werden. Dabei wird das zweite optisch transparente Fenster 25 mit Licht beleuchtet, das durch das erste optisch transparente Fenster 22 in die Sichtpassage 2 einfällt. Gesonderte Beleuchtungsmittel sind nicht erforderlich.

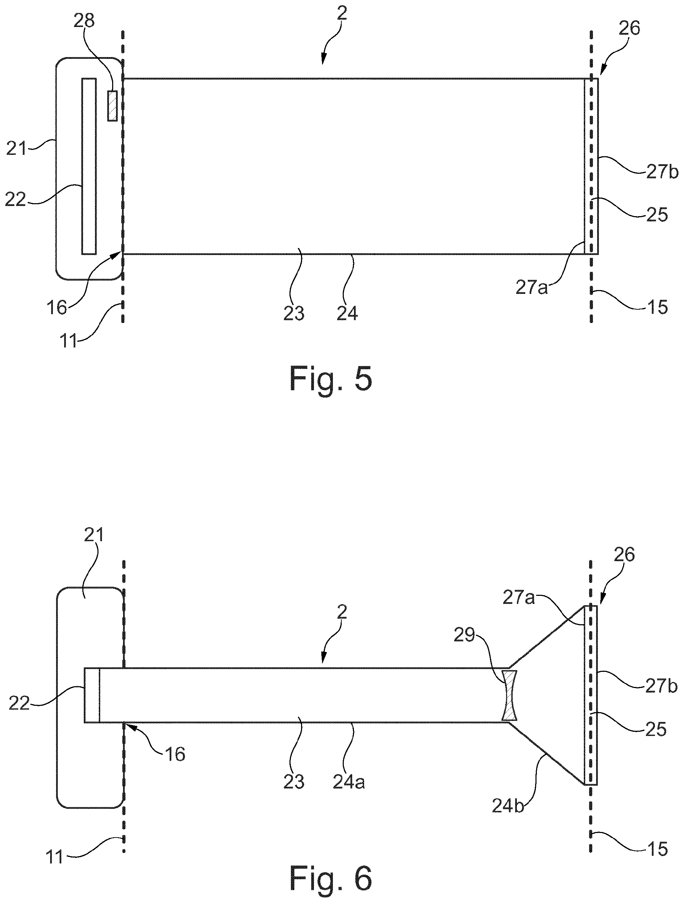

Die Figur 5 zeigt ein alternatives Ausführungsbeispiel, das sich vom Ausführungsbeispiel der Figuren 3 und 4 lediglich dadurch unterscheidet, dass in die Sichtpassage 2 zusätzlich eine Beleuchtungsquelle 28 integriert ist. Die Beleuchtungsquelle 28 beleuchtet zusätzlich zu dem Licht, das durch das erste optisch transparente Fenster 22 in die Sichtpassage 2 fällt, das zweite optisch transparente Fenster 25. Im dargestellten Ausführungsbeispiel befindet sich die Beleuchtungsquelle 28 nahe des Sichtfensters 22. Grundsätzlich kann sie jedoch an einer beliebigen Stelle innerhalb der Sichtpassage 2 angeordnet sein.

Die Figur 6 zeigt ein weiteres alternatives Ausführungsbeispiel. Bei dem Ausführungsbeispiel der Figur 6 ist in die Sichtpassage 2 ein optisches System, nämlich ein Weitwinkelobjektiv 29 integriert. Das Weitwinkelobjektiv 29 kann dabei als Fischaugenobjektiv ausgebildet sein. Das Weitwinkelobjektiv 29 ist in einem Bereich der Sichtpassage 2 angeordnet, in dem sich die Querschnittsfläche der Sichtpassage 2 ändert. So umfasst die Sichtpassage 2 einen ersten Abschnitt 24a, in dem die Sichtpassage 2 eine kleinere, konstante Querschnittsfläche aufweist und einen zweiten Abschnitt 24b, in dem sich die Querschnittsfläche der Sichtpassage stetig vergrößert. Im Abschnitt 24b vergrößert sich die Querschnittsfläche dabei beispielsweise trichterförmig. Das Weitwinkelobjektiv 29 ist am Übergang zwischen den beiden Abschnitten 24a, 24b angeordnet.

Entsprechend der geringeren Querschnittsfläche der Sichtpassage 2 in dem Abschnitt 24a, der an das erste optisch transparente Fenster 22 angrenzt, ist auch das erste optisch transparente Fenster 22 von seinen Ausmaßen her reduziert.

Aufgrund des Weitwinkelobjektivs 29 wird das gesamte zweite optisch transparente Fenster 25 einschließlich des Füllstands, den dieses anzeigt, auf das kleinere erste optisch transparente Fenster 22 abgebildet, sodass der Füllstand wiederum visuell von außen abgelesen werden kann. Das zweite optisch transparente Fenster 25 wird dabei verkleinert auf das erste optisch transparente Fenster abgebildet, so das eine verkleinerte Abbildung des zweiten optisch transparenten Fensters 25 zu sehen ist. Dies ist jedoch unproblematisch, wenn in das zweite optisch transparente Fenster 25 eine Skala integriert ist, sodass weiterhin unmittelbar der Füllstand abgelesen werden kann. Alternativ könnte auch eine an den Abbildungsmaßstab angepasste Skala in das erste optisch transparente Fenster 22 integriert sein.

Die beschriebene Ausgestaltung der Sichtpassage 2 erlaubt es, das Innenvolumen 23, das die Sichtpassage 2 im Inneren des Öltanks ausbildet, zu reduzieren und dadurch die Ölmenge zu erhöhen, die der Öltank aufnehmen kann.

In einer Abwandlung der beschriebenen Ausführungsbeispiele kann vorgesehen sein, dass an der Sichtpassage 2 im Bereich des zweiten transparenten Fensters 25 zusätzlich ein digitaler Sensor angeordnet ist, der über elektrische Messwerte den Füllstand des Öltanks erfasst. Durch Anordnung eines solchen digitalen Sensors an der Sichtpassage 2 kann in einfacher Weise sichergestellt werden, dass auch der digitale Sensor in dem Bereich des Öltanks angeordnet ist, in dem durch Schräglagen des Öltanks verursachte Füllstandsänderungen minimal sind, nämlich in der Tankmitte. Gleichzeitig kann mittels der Sichtpassage 2 in einfacher Weise eine Befestigung eines solchen digitalen Sensors im Öltank erfolgen.

Die Erfindung beschränkt sich in ihrer Ausgestaltung nicht auf die vorstehend erläuterten Ausführungsbeispiele, die lediglich beispielhaft zu verstehen sind. Beispielsweise kann die Sichtpassage eine andere Form als beschrieben aufweisen.

Die Merkmale der einzelnen beschriebenen Ausführungsbeispiele der Erfindung können in verschiedenen Kombinationen miteinander kombiniert werden. Sofern Bereiche definiert sind, so umfassen diese sämtliche Werte innerhalb dieser Bereiche sowie sämtliche Teilbereiche, die in einen Bereich fallen.

## Patentansprüche

1. Öltank (1), der aufweist:
- eine Außenwandung, die eine Seitenbegrenzung (11) umfasst,
- ein Tankinneres (13), das von der Außenwandung umschlossen ist, und
- eine Sichtpassage (2), die sich ausgehend von der Seitenbegrenzung (11) in das Tankinnere (13) des Öltanks (1) erstreckt und es ermöglicht, den Füllstand (X) des mit Öl gefüllten Öltanks (1) in der Tankmitte (14), in der durch Schräglagen des Öltanks (1) verursachte Füllstandsänderungen des mit Öl gefüllten Öltanks minimal sind, von außen visuell abzulesen,
- wobei die Sichtpassage (2) aufweist:
o einen Passagenanfang (21), der im Bereich der Seitenbegrenzung (11) ausgebildet ist und der ein erstes optisch transparentes Fenster (22) umfasst,
o ein Passagenende in der Tankmitte (14),
**dadurch gekennzeichnet, dass**
- das Passagenende ein zweites optisch transparentes Fenster (25) umfasst, das den Füllstand in der Tankmitte (14) anzeigt,
- die Sichtpassage (2) des weiteren eine Passagenwandung (24) umfasst, die sich zwischen dem Passagenanfang (21) und dem Passagenende erstreckt und die Sichtpassage (2) gegenüber dem Tankinneren (13) abgrenzt,
- die Sichtpassage (2) sich zwischen dem Passagenanfang (21) und dem Passagenende (26) geradlinig erstreckt, wobei eine am zweiten optisch transparenten Fenster (25) sichtbare Füllstandshöhe über das erste optisch transparente Fenster (22) visuell ablesbar ist, und
- die Sichtpassage (2) mit Luft oder einem anderen transparenten Gas gefüllt ist.

2. Öltank nach Anspruch 1, **dadurch gekennzeichnet, dass** das erste optisch transparente Fenster (22) feuerfest in der Seitenbegrenzung (11) ausgebildet sind.

3. Öltank nach Anspruch 1 oder 2, **dadurch gekennzeichnet, dass** das zweite optisch transparente Fenster (25) mit einer Höhenskala versehen ist.

4. Öltank nach einem der vorangehenden Ansprüche, **dadurch gekennzeichnet, dass** die Passagenwandung (24) durch eine Metallwand gebildet ist.

5. Öltank nach einem der vorangehenden Ansprüche, **dadurch gekennzeichnet, dass** die Sichtpassage (2) ein optisches System (29) aufweist, das das zweite optisch transparente Fenster (25) optisch auf das erste optisch transparente Fenster (22) abbildet.

6. Öltank nach Anspruch 5, **dadurch gekennzeichnet, dass** das optische System (29) als Weitwinkelobjektiv ausgebildet ist und sich am Übergang zwischen einem ersten Bereich (24a) der Sichtpassage (2), der eine kleinere Querschnittsfläche aufweist, und einem zweiten Bereich (24b) der Sichtpassage (2), der eine sich vergrößernde Querschnittsfläche aufweist, befindet.

7. Öltank nach einem der vorangehenden Ansprüche, **dadurch gekennzeichnet, dass** die Sichtpassage (2) sich ausgehend von der Seitenbegrenzung (11) durch das Tankinnere (13) in Richtung einer Tankmittenlinie (15) des Öltanks (1) erstreckt, die im horizontal ausgerichteten Öltank (1) vertikal zur Oberfläche des im Öltanks (1) befindlichen Öls verläuft, wobei die Tankmittenlinie (15) mindestens einen Punkt aufweist, in dem durch Schräglagen des Öltanks (1) verursachte Füllstandsänderungen des mit Öl gefüllten Öltanks minimal sind.

8. Öltank nach Anspruch 7, **dadurch gekennzeichnet, dass** die Sichtpassage (2) sich ausgehend von der Seitenbegrenzung (11) durch das Tankinnere (13) bis zur Tankmittenlinie (15) erstreckt.

9. Öltank nach Anspruch 7 oder 8, **dadurch gekennzeichnet, dass** die Tankmittenlinie (15) in der oder parallel zur Ebene des zweiten optisch transparenten Fensters (25) verläuft.

10. Öltank nach einem der vorangehenden Ansprüche, **dadurch gekennzeichnet, dass** in die Sichtpassage (2) eine Beleuchtungsquelle (28) integriert ist, die das zweite optisch transparente Fenster (25) beleuchtet.

11. Öltank nach einem der vorangehenden Ansprüche, **dadurch gekennzeichnet, dass** an der Sichtpassage (2) zur Tankmitte hin ein digitaler Sensor angeordnet ist, der die Füllstandshöhe des Öltanks erfasst.

12. Öltank nach einem der vorangehenden Ansprüche, **dadurch gekennzeichnet, dass** der Öltank (1) und die Sichtpassage (2) derart ausgebildet sind, dass die Sichtpassage (2) nach Herstellung des Öltanks (1) von außen durch eine Öffnung in der Seitenbegrenzung (11) des Öltanks (1) in diesen einsteckbar ist.

13. Flugtriebwerk mit einem Öltank nach Anspruch 1.

## Claims

1. Oil tank (1), having:
- an outer wall comprising a lateral delimitation (11),
- a tank interior (13), which is enclosed by the outer wall, and
- a viewing passage (2), which extends starting from the lateral delimitation (11) into the tank interior (13) of the oil tank (1) and makes it possible to visually read the filling level (X) of the oil- filled oil tank (1) in the tank centre (14), in which filling level changes of the oil- filled oil tank that are caused by inclined orientations of the oil tank (1) are minimum, from the outside,
- wherein the viewing passage (2) has:
o a passage start (21), formed in the region of the lateral delimitation (11) and comprising a first optically transparent window (22),
o a passage end in the tank centre (14),
**characterized in that**
- the passage end comprises a second optically transparent window (25), which shows the filling level in the tank centre (14),
- the viewing passage (2) furthermore comprises a passage wall (24), which extends between the passage start (21) and the passage end and delimits the viewing passage (2) with respect to the tank interior (13),
- the viewing passage (2) extends rectilinearly between the passage start (21) and the passage end (26), wherein a filling level height that is visible at the second optically transparent window (25) is visually readable via the first optically transparent window (22), and
- the viewing passage (2) is filled with air or another transparent gas.

2. Oil tank according to Claim 1, **characterized in that** the first optically transparent window (22) is embodied in the lateral delimitation (11) to be refractory.

3. Oil tank according to Claim 1 or 2, **characterized in that** the second optically transparent window (25) is provided with a height scale.

4. Oil tank according to one of the preceding claims, **characterized in that** the passage wall (24) is formed by a metal wall.

5. Oil tank according to one of the preceding claims, **characterized in that** the viewing passage (2) has an optical system (29) that optically images the second optically transparent window (25) onto the first optically transparent window (22).

6. Oil tank according to Claim 5, **characterized in that** the optical system (29) is embodied as a wide-angle lens and is located at the transition between a first region (24a) of the viewing passage (2), which has a smaller cross-sectional area, and a second region (24b) of the viewing passage (2), which has a widening cross-sectional area.

7. Oil tank according to one of the preceding claims, **characterized in that** the viewing passage (2) extends starting from the lateral delimitation (11) through the tank interior (13) in the direction of a tank central line (15) of the oil tank (1), which line (15) extends, in the case of a horizontally oriented oil tank (1), vertically with respect to the surface of the oil located in the oil tank (1), wherein the tank centre line (15) has at least one point at which filling level changes of the oil-filled oil tank that are caused by inclined orientations of the oil tank (1) are minimum.

8. Oil tank according to Claim 7, **characterized in that** the viewing passage (2) extends starting from the lateral delimitation (11) through the tank interior (13) up to the tank centre line (15).

9. Oil tank according to Claim 7 or 8, **characterized in that** the tank centre line (15) extends in the plane or parallel to the plane of the second optically transparent window (25).

10. Oil tank according to one of the preceding claims, **characterized in that** an illumination source (28), which illuminates the second optically transparent window (25), is integrated into the viewing passage (2).

11. Oil tank according to one of the preceding claims, **characterized in that** a digital sensor capturing the filling level height of the oil tank is arranged at the viewing passage (2) toward the tank centre.

12. Oil tank according to one of the preceding claims, **characterized in that** the oil tank (1) and the viewing passage (2) are embodied such that the viewing passage (2) is able to be inserted after the production of the oil tank (1) from the outside through an opening in the lateral delimitation (11) of the oil tank (1) into the latter.

13. Aircraft engine having an oil tank according to Claim 1.

## Revendications

1. Réservoir de carburant (1), comportant :
- une paroi extérieure qui comprend une délimitation latérale (11) ;
- un intérieur de réservoir (13) qui est ceint par la paroi extérieure ; et
- un passage de contrôle visuel (2) qui s'étend de la délimitation latérale (11) jusqu'à l'intérieur de réservoir (13) du réservoir de carburant (1) et permet de lire visuellement depuis l'extérieur le niveau de remplissage (X) du réservoir de carburant (1) rempli de carburant au milieu du réservoir (14) où les variations de niveau de remplissage du réservoir de carburant rempli de carburant provoquées par les pentes du réservoir de carburant (1) sont minimales ;
- le passage de contrôle visuel (2) comportant :
o un début de passage (21) qui est réalisé dans la région de la délimitation latérale (11) et qui comporte une première fenêtre (22) optiquement transparente ;
o une fin de passage située au milieu du réservoir (14) ;
**caractérisé en ce que** :
- la fin de passage comprend une deuxième fenêtre (25) optiquement transparente qui affiche le niveau de remplissage au milieu du réservoir (14) ;
- le passage de contrôle visuel (2) comprend également une paroi de passage (24) qui s'étend entre le début de passage (21) et la fin de passage et délimite le passage de contrôle visuel (2) par rapport à l'intérieur de réservoir (13) ;
- le passage de contrôle visuel (2) s'étend en ligne droite entre le début de passage (21) et la fin de passage (26), une hauteur de niveau de remplissage visible au niveau de la deuxième fenêtre (25) optiquement transparente pouvant être lue visuellement par le biais de la première fenêtre (22) optiquement transparente ; et
- le passage de contrôle visuel (2) est rempli d'air ou d'un autre gaz transparent.

2. Réservoir de carburant selon la revendication 1, **caractérisé en ce que** la première fenêtre (22) optiquement transparente est réalisée de façon à être ignifuge dans la délimitation latérale (11).

3. Réservoir de carburant selon la revendication 1 ou 2, **caractérisé en ce que** la deuxième fenêtre (25) optiquement transparente est pourvue d'une échelle en hauteur.

4. Réservoir de carburant selon l'une quelconque des revendications précédentes, **caractérisé en ce que** la paroi de passage (24) est formée par une paroi métallique.

5. Réservoir de carburant selon l'une quelconque des revendications précédentes, **caractérisé en ce que** le passage de contrôle visuel (2) comprend un système optique (29) qui représente la deuxième fenêtre optiquement transparente (25) optiquement sur la première fenêtre (22) optiquement transparente.

6. Réservoir de carburant selon la revendication 5, **caractérisé en ce que** le système optique (29) est réalisé sous la forme d'un objectif grand-angle et se trouve au niveau de la transition entre une première région (24a) du passage de contrôle visuel (2) comportant une plus petite surface de section transversale et une deuxième région (24b) du passage de contrôle visuel (2) qui comporte une surface de section transversale s'agrandissant.

7. Réservoir de carburant selon l'une quelconque des revendications précédentes, **caractérisé en ce que** le passage de contrôle visuel (2) s'étend à partir de la délimitation latérale (11) à travers l'intérieur de réservoir (13) en direction d'une ligne centrale de réservoir (15) du réservoir de carburant (1) s'étendant dans le réservoir de carburant (1) orienté horizontalement, verticalement par rapport à la surface du carburant se trouvant dans le réservoir de carburant (1), la ligne centrale de réservoir (15) comportant au moins un point au niveau duquel les variations de niveau de remplissage du réservoir de carburant rempli de carburant provoquées par les pentes du réservoir de carburant (1) sont minimales.

8. Réservoir de carburant selon la revendication 7, **caractérisé en ce que** le passage de contrôle visuel (2) s'étend à travers l'intérieur de réservoir (13) jusqu'à la ligne centrale de réservoir (15), à partir de la délimitation latérale (11).

9. Réservoir de carburant selon la revendication 7 ou 8, **caractérisé en ce que** la ligne centrale de réservoir (15) s'étend dans le plan ou parallèlement au plan de la deuxième fenêtre (25) optiquement transparente.

10. Réservoir de carburant selon l'une quelconque des revendications précédentes, **caractérisé en ce qu'**une source d'éclairage (28) est intégrée dans le passage de contrôle visuel (2), ladite source éclairant la deuxième fenêtre optiquement transparente (25).

11. Réservoir de carburant selon l'une quelconque des revendications précédentes, **caractérisé en ce qu'**un capteur numérique est disposé au niveau du passage de contrôle visuel (2) conduisant au centre du réservoir, ledit capteur détectant la hauteur de niveau de remplissage du réservoir de carburant.

12. Réservoir de carburant selon l'une quelconque des revendications précédentes, **caractérisé en ce que** le réservoir de carburant (1) et le passage de contrôle visuel (2) sont réalisés de telle sorte que le passage de contrôle visuel (2) puisse être enfiché dans le réservoir de carburant depuis l'extérieur après la fabrication du réservoir de carburant (1) à travers une ouverture pratiquée dans la délimitation latérale (11) du réservoir de carburant (1).

13. Groupe motopropulseur d'engin volant avec un réservoir de carburant selon la revendication 1.
